# EUROPEAN PATENT APPLICATION

(11) **EP 1 862 350 A1**
(43) Date of publication of application: **05.12.2007**
(21) Application number: 07252181.8
(22) Date of filing: 26.05.2007
(51) Int. Cl.: B60M 1/30

(54) **Conductor rails**

(30) Priority: 03.06.2006 GB 0611002
(71) Applicant: Brecknell Willis & Co. Ltd., Chard, Somerset TA20 2DE (GB)
(72) Inventor: Hartland, David Julian, Taunton, Somerset, TA1 3QJ (GB)
(74) Representative: Brown, Michael Stanley

(57) **Abstract**

A method of manufacturing a conductor rail comprising a main body (11) and a wear-resisting facing layer comprises feeding the main body (11) to a welding station (10) while simultaneously feeding the facing layer to the welding station as two or more portions (12), and welding the two or more portions (12) of the facing layer together at the welding station (10) in such manner as to obtain a mechanical interlocking engagement of the facing layer with the main body (11).

## Description

### Field of the Invention

This invention relates to conductor rails comprising a main body and a wear-resisting facing layer, such as are used in electric railway systems and in other transportation systems such as overhead conveyors.

### Background to the Invention

One method of manufacturing a conductor rail is described in British Patent Specification No. 2 231 544 and includes forming the facing layer as two or more portions that are welded together in contact with the main body in such manner as to obtain a mechanical interlocking engagement of the facing layer with the main body.

In the particular method described in Specification No. 2 231 544, the facing layer is formed from two J-section stainless steel strips that are placed in position on the main body, which is of aluminium, so that the arcuate connecting portions of the J's fit closely over radiused surfaces of the main body so that the inwardly facing ends of the upper limbs of the two stainless steel strips are almost in contact.

When the two stainless steel strips have been placed in position on the aluminium body, being snapped in position, if desired, the oppositely facing ends of the upper limbs of the two strips are welded together to form a longitudinal seam weld. The welding parameters are so controlled as to ensure that, after the welding operation has been completed, the facing layer formed from the two stainless steel strips tend to contract, thereby inducing a stress within the facing layer that, in effect, pulls the two J-section strips into positive gripping engagement with the head portion of the aluminium main body.

It is an object of the present invention to provide a method of manufacturing a conductor rail that offers a number of advantages, as explained below, over the method of manufacture described in Specification No. 2 231 544.

### Summary of the Invention

According to the present invention there is provided a method of manufacturing a conductor rail comprising a main body and a wear-resisting facing layer, the method comprising:
a) providing a welding station,
b) providing feed means for feeding the main body to the welding station and for feeding the facing layer to the welding station as two or more portions, and
c) welding the two or more portions of the facing layer together at the welding station in such manner as to obtain a mechanical interlocking engagement of the facing layer with the main body.

The facing layer is preferably formed from two substantially J-section stainless steel strips and the main body is preferably of aluminium and has a configuration, including a base, a stem and a head portion, as described in Specification No. 2 231 544. The composition of the stainless steel is preferably as described in British Patent Specification No. 2 259 894. Testing of the rails may be carried out by the method described in British Patent Specification No. 2 274 712.

The welding station preferably includes a welding head and the feed means preferably includes pressure-applying means for pressing the two stainless steel strips into contact with the head portion of the main aluminium body as the stainless steel strips and the aluminium main body are fed past the welding head.

According to a second aspect of the present invention there is provided apparatus for use in the manufacture of a conductor rail comprising a main body and a wear-resisting facing layer, the apparatus comprising:
a welding station including a welding head, and
feed means for feeding the main body to the welding station and for feeding the facing layer to the welding station as two or more portions that are welded together at the welding station in such manner as to obtain a mechanical interlocking engagement of the facing layer with the main body,
the feed means including pressure-applying means for pressing the two or more portions of the facing layer into contact with the main body as the portions and the main body are fed past the welding head.

The feed means preferably includes an endless chain drive system comprising two sets of segmented tracks for feeding the components of the conductor rail past the welding head.

The pressure-applying means preferably includes rams that act on sections of the endless chain drive system.

Rollers may be provided before and after the welding station that act on the conductor rail in such manner that the conductor rail is caused to adopt an accurately curved configuration at the welding head and as it leaves the welding head, such accurately curved configuration being so determined as to ensure that, when the welding operation has been completed and the formed conductor rail has been cooled or allowed to cool to room temperature, the conductor rail adopts a linear configuration.

Means are preferably provided for adjusting the positions of the rollers to ensure that linearity of the formed conductor rail is maintained. The conductor rail is preferably produced in lengths of the order of 20 metres.

The method described in Patent Specification No. 2 231 544 involves separate production of each conductor rail and, between successive welding operations, it is necessary to allow the formed conductor rail to cool and then carry out unloading and loading operations. In contrast, with the method of the present invention, substantially continuous production can be obtained, resulting in significant cost-savings.

The method described in Patent Specification No. 2 231 544 involves the use of a movable welding head that is caused to move from one end of the conductor rail to the other. With the method of the present invention, the welding station is static, facilitating the use of a more robust unit. Setting of the parts of the welding station in the correct relative positions is also facilitated. It is also not necessary to use specially profiled jaws to hold the strips forming the wear-resisting facing layer in contact with the head portion of the aluminium main body.

### Brief Description of the Drawings

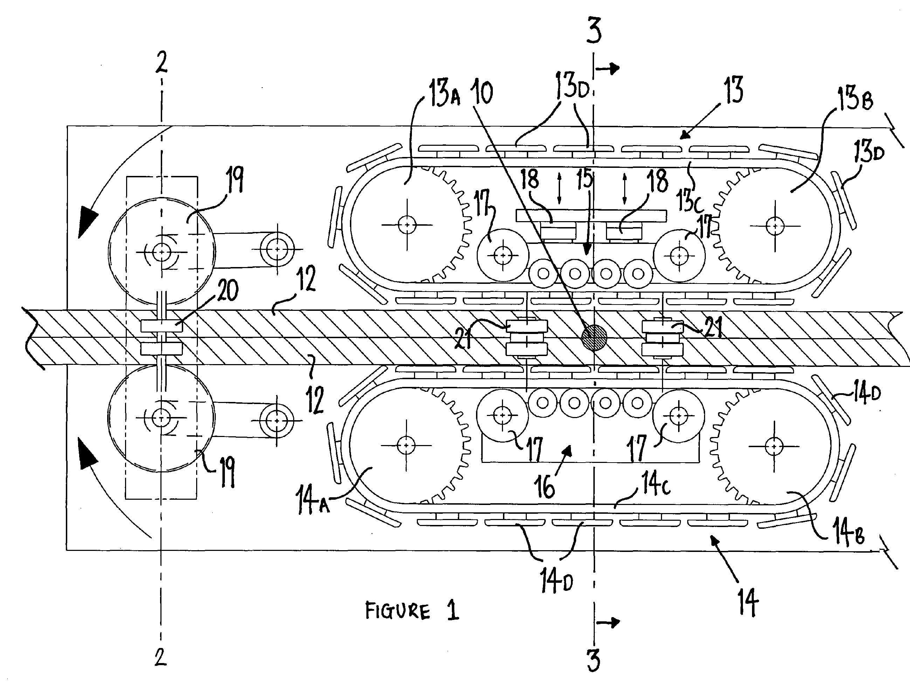

Figure 1 is a plan view of an apparatus for use in the manufacture of a conductor rail,

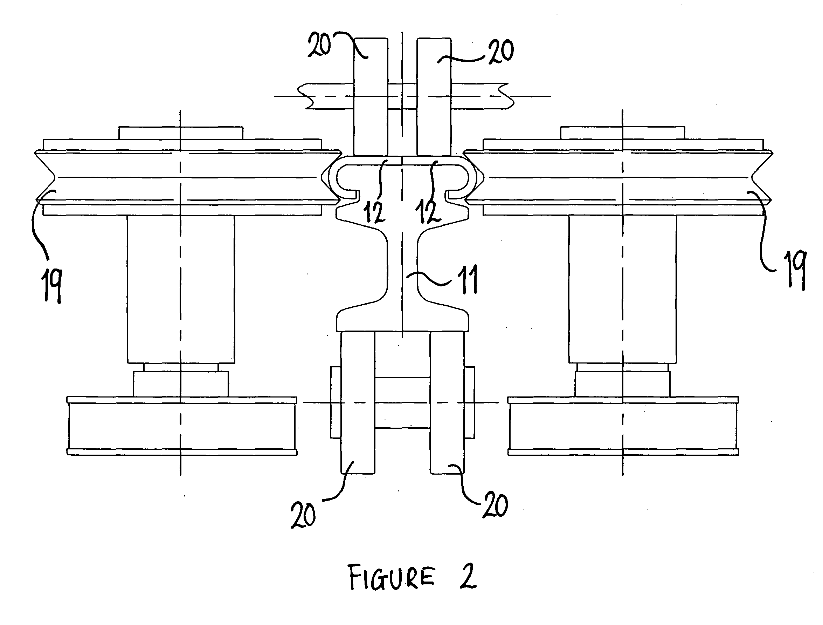

Figure 2 is a vertical sectional view of the apparatus along the line 2 - 2 of Figure 1, and

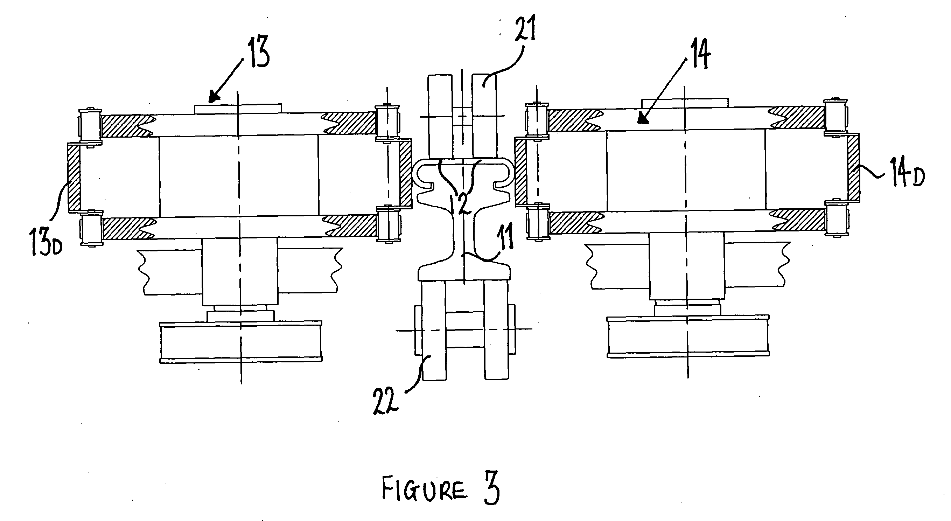

Figure 3 is a vertical sectional view of the apparatus along the line 3 - 3 of Figure 1.

### Description of the Preferred Embodiment

The apparatus includes a welding station at which an overhead welding head 10 is located and an extruded aluminium main body 11 and a pair of J-section stainless steel strips 12 are fed simultaneously to the welding station by two interacting chain-driven rail feed units 13 and 14. The configurations of the main body 11 and of the J-section strips 12 are as described in British Patent Specification No. 2 231 544, to which reference should be made, and the composition of the stainless steel is preferably as described in British Patent Specification No. 2 259 894.

Each of the feed units 13 and 14 includes a driven chain wheel 13A, 14A and an idler chain wheel 13B, 14B around which chains 13C, 14C are entrained. The chains 13C, 14C carry segmented tracks afforded by a plurality of track elements 13D, 14D. There is a bolster 15, 16 within each of the feed units 13, 14 and each bolster 15, 16 has mounted on it a plurality of rollers 17 that support the track elements 13D and 14D as they move past the welding head 10. One of the bolsters 15 is acted upon by a pair of hydraulic rams 18 whilst the other bolster 16 is fixed. The action of the hydraulic rams 18, urging the movable bolster 15 towards the fixed bolster 16, ensures that controlled pressure is applied to the J-section strips 12 pressing them into engagement with the head portion of the main body 11 of the rail.

When the two J-section strips 12 have been pressed into secure engagement with the head portion of the main body 11 of the rail, continued advancing movement of the combination of the main body 11 and the two strips 12 under the action of the feed units 13 and 14 results in movement of the strips 12 past the torch of the welding head 10. The two strips 12 are thus welded together while being subjected to a compression force and the parts that have been welded together remain subjected to a continued compressive force during further advancing movement of the combination of the main body 11 and the two strips 12. The dimensions of the segmented tracks and the rate of advancing movement thereof are so related that substantial cooling of the weld has taken place by the time that significant reduction of the compressive force occurs.

Rollers 19 and 20 are provided before the welding station that act on the components of the conductor rail in such manner that the conductor rail is caused to adopt a predetermined configuration at the welding head and similar rollers may be provided after the welding head, such predetermined configuration being so determined as to ensure that, when the welding operation has been completed and the formed conductor rail has been cooled or allowed to cool to room temperature, the conductor rail adopts a linear configuration.

Additional rollers 21 and 22 are provided adjacent the welding head 10, above and below the components 11, 12 of the conductor rail to ensure that the two J-section strips 12 are maintained in close contact with the head portion of the main body 11 of the rail as the components of the rail are moved past the welding head 10.

Adjustment means (not shown) can be provided for adjusting the positions of the rollers 19, 20, 21 and 22 to ensure that linearity of the formed conductor rail is maintained, i.e. to take out any distortion due to the heat of the weld and the differential shrinkage of the two metals, aluminium and stainless steel.

Advantages of the above-described method and apparatus include the following:-
a) a continuous method of production is obtained,
b) there is no limit to the length of the rails, though they will typically be formed as 20 metre lengths,
c) the properties of the rail are consistent along its length,
d) a faster production rate is obtained,
e) the welding head can be tuned to provide a continuous output with no heat cycling,
f) the rail can, if desired, be deliberately curved during production or accurate linearity can be achieved, and
g) measurements of the finished properties of the rail can be carried out continuously on the moving rail.

## Claims

1. A method of manufacturing a conductor rail comprising a main body and a wear-resisting facing layer, the method comprising:
providing a welding station,
providing feed means for feeding the main body to the welding station and for feeding the facing layer to the welding station as two or more portions, and
welding the two or more portions of the facing layer together at the welding station in such manner as to obtain a mechanical interlocking engagement of the facing layer with the main body.

2. A method as claimed in Claim 1, in which the facing layer is formed from two substantially J-section stainless steel strips and the main body is of aluminium and has a configuration including a base, a stem and a head portion.

3. A method as claimed in Claim 2, in which the welding station includes a welding head and the feed means includes pressure-applying means for pressing the two stainless steel strips into contact with the head portion of the main aluminium body as the stainless steel strips and the aluminium main body are fed past the welding head.

4. A method as claimed in Claim 1, in which rollers are provided before and after the welding station that act on the conductor rail in such manner that the conductor rail is caused to adopt a predetermined configuration at the welding station and as it leaves the welding station, such predetermined configuration being such as to ensure that, when the welding operation has been completed and the formed conductor rail has been cooled or allowed to cool to room temperature, the conductor rail adopts a linear configuration.

5. Apparatus for use in the manufacture of a conductor rail comprising a main body and a wear-resisting facing layer, the apparatus comprising:
a welding station including a welding head, and
feed means for feeding the main body to the welding station and for feeding the facing layer to the welding station as two or more portions that are welded together at the welding station in such manner as to obtain a mechanical interlocking engagement of the facing layer with the main body,
the feed means including pressure-applying means for pressing the two or more portions of the facing layer into contact with the main body as the portions and the main body are fed past the welding head.

6. Apparatus as claimed in Claim 5, in which the feed means includes an endless chain drive system comprising two sets of segmented tracks for feeding the components of the conductor rail past the welding head.

7. Apparatus as claimed in Claim 6, in which the pressure-applying means includes rams that act on sections of the endless chain drive system.

8. Apparatus as claimed in Claim 5, in which rollers are provided before and after the welding station that act on the conductor rail in such manner that the conductor rail is caused to adopt a predetermined configuration at the welding head and as it leaves the welding head, such predetermined configuration being such as to ensure that, when the welding operation has been completed and the formed conductor rail has been cooled or allowed to cool to room temperature, the conductor rail adopts a linear configuration.
